# EUROPÄISCHE PATENTANMELDUNG

(11) **EP 3 133 344 A1**
(43) Veröffentlichungstag der Anmeldung: **22.02.2017**
(21) Anmeldenummer: 16184868.4
(22) Anmeldetag: 19.08.2016
(51) Int. Cl.: F23L 15/04, F28F 1/42, F28F 13/00, F23D 14/66

(54) **REKUPERATORBRENNER MIT KERAMISCHEM REKUPERATOR UND VERFAHREN ZUR HERSTELLUNG**

(30) Priorität: 20.08.2015 DE 102015113794
(71) Anmelder: AICHELIN Holding GmbH, 2340 Mödling (AT)
(72) Erfinder: Rakette, Roland, 09599 Freiberg (DE); Grämer, Tobias, 09599 Freiberg (DE); Wolf, Matthias, 09599 Freiberg (DE)
(74) Vertreter: Witte, Weller & Partner Patentanwälte mbB

(57) **Zusammenfassung**

Es wird ein keramischer Rekuperator (30) für einen Rekuperatorbrenner zur Vorwärmung von Verbrennungsluft mittels Abgaswärme angegeben, wobei der Rekuperator (30) einen rohrförmigen Grundkörper (60) mit einer Innenseite (56) und einer Außenseite (54) aufweist, und wobei zumindest auf der Innenseite (56) oder auf der Außenseite (54) mindestens eine zellulare Struktur (62, 62', 62", 62"', 62^{IV}, 62^{V}) aufgenommen ist, die vorzugsweise in Längsrichtung des Rekuperators (30) durchströmbar ist. Die zellulare Struktur (62, 62', 62", 62"', 62^{IV}, 62^{V}) kann beispielsweise durch 3D-Druck mit einem Precursor und anschließendes Brennen hergestellt werden (Fig. 3).

## Beschreibung

Die Erfindung betrifft einen keramischen Rekuperator für einen Rekuperatorbrenner, ein Verfahren zur Herstellung eines keramischen Rekuperators, sowie einen Rekuperatorbrenner mit einem solchen Rekuperator.

Im Stand der Technik sind Rekuperatorbrenner mit Rekuperatoren seit langem bekannt. Rekuperatorbrenner weisen zur Erhöhung des Wirkungsgrades einen Rekuperator auf, an dem auf der einen Seite Abgas entlanggeführt wird und auf der anderen Seite Verbrennungsluft im Gegenstromprinzip geführt wird, um so eine Vorwärmung der Verbrennungsluft zu erreichen. Rekuperatorbrenner mit einem keramischen Rekuperator sind etwa aus der EP 1 486 728 A2 bekannt. Hierbei weist der Rekuperator einen als Wärmeaustauschfläche mit strömenden Fluiden dienenden Rohrabschnitt auf, an dem eine Mehrzahl von spiralförmig zur Längsachse des Rekuperators verlaufende wellenförmig ausgebildete Falten vorgesehen sind.

Auch wenn ein solcher Rekuperator bereits über einen verbesserten Wirkungsgrad verfügt, so ist doch eine weitere Steigerung des Wirkungsgrades erwünscht.

Bei weiteren im Stand der Technik bekannten keramischen Rekuperatoren sind z.B. wellige, spiralige, zackige, beulige oder noppige Ausbuchtungen an der Oberfläche vorgesehen, um Oberflächenvergrößerungen zu erreichen.

Jedoch haben solche keramischen Rekuperatoren eine vergleichsweise geringe Wärmeübertragungsfläche und niedrigeren Wärmeübertragungskoeffizienten im Vergleich zu Rekuperatorstrukturen, die sich mit metallischen Werkstoffen verwirklichen lassen, woraus ein geringerer Wirkungsgrad resultiert.

Ferner ist aus der DE 102011 103 106 A1 eine über eine keramische Zwischenschicht mit einer aus einem Textilverfahren abgeleiteten keramischen Struktur beschichteten Rekuperatoroberfläche in Form von Bögen, Schlaufen, freistehenden Zylindern oder Kombinationen daraus bekannt.

Die betreffenden Strukturen weisen nur eine geringe Haltbarkeit auf und neigen zum Bruch. Die Montage und das Handling gestalten sich daher schwierig.

Vor diesem Hintergrund liegt der Erfindung die Aufgabe zugrunde, einen Rekuperator für einen Rekuperatorbrenner in einfacher und robuster Bauweise zu schaffen, der einen möglichst hohen Wirkungsgrad aufweist.

Ferner sollen ein Verfahren zur Herstellung eines solchen Rekuperators und ein Rekuperatorbrenner mit einem derartigen Rekuperator angegeben werden.

Hinsichtlich des Rekuperators wird diese Aufgabe durch einen Rekuperator gelöst, der einen rohrförmigen Grundkörper mit einer Innenseite und einer Außenseite aufweist, wobei auf der Innenseite oder auf der Außenseite mindestens eine zellulare Struktur aufgenommen ist, die vorzugsweise in Längsrichtung des Rekuperators durchströmbar ist.

Die Aufgabe der Erfindung wird auf diese Weise vollkommen gelöst.

Durch die zumindest eine zellulare Struktur wird die Wärmeübertragung am Rekuperator und damit der Wirkungsgrad deutlich verbessert. Gleichzeitig ergibt sich eine reduzierte Schallentwicklung, da die zellulare Struktur wie ein Schalldämpfer für durchströmende Gase wirkt.

Es wird ferner erwartet, dass ein solcher Rekuperator eine gewisse Schalldämpfungswirkung entfaltet, ohne dass hierzu zusätzliche Maßnahmen getroffen werden müssen.

Da in den Vertiefungen auf der Innenseite oder auf der Außenseite, vorzugsweise auf beiden Seiten, zellulare Strukturen aufgenommen sind, wird die Wechselwirkung zwischen dem Gasstrom und dem Rekuperator intensiviert, so dass sich eine verbesserte Wärmeübertragung und damit eine Erhöhung des Wirkungsgrades ergibt.

Unter einer zellularen Struktur versteht man in diesem Zusammenhang eine Struktur, die nicht kompakt ist, sondern zellular ausgebildet ist, d.h. mit gewissen Zellen oder Poren, so dass eine zusammenhängende, offenporige Hohlstruktur entsteht.

Es kann sich hierbei um einen Schaum, insbesondere einen zumindest teilweise offenporigen Schaum handeln. Jedoch sind auch andere Zellstrukturen denkbar, die bspw. nicht wie bei einem Schaum zufällig orientiert sind, sondern regelmäßig orientiert sein können oder ggf. auch eine bestimmte Texturierung aufweisen können. Derartige zellulare Strukturen sind ähnlich zu den bekannten zellularen Metallstrukturen.

Die Porenweiten bzw. Zellweiten in einer solchen zellularen Struktur betragen vorzugsweise etwa 1,5 bis 6 Millimeter (Durchmesser bzw. maximale Ausdehnung in einer Erstreckungsrichtung einer Pore, im Falle von Schaum). Soweit es sich um eine Zellstruktur handelt, die kein Schaum ist (periodische Gitter, Maschen, Oktaeder etc.), ist diese Zellweite auf die Zellgröße einer solchen Zellstruktur anwendbar.

Durch eine derartige Dimensionierung wird sichergestellt, dass kein zu großer Druckverlust bei Durchströmung des Rekuperators in Axialrichtung auftritt und dass andererseits eine ausreichende Stabilität der zellularen Struktur gewährleistet ist.

Gemäß einer weiteren Ausgestaltung der Erfindung sind zumindest an der Innenseite oder der Außenseite des Rekuperators jeweils eine Mehrzahl von Erhöhungen und Vertiefungen vorgesehen, wobei zellulare Stukturen vorzugsweise zumindest teilweise in die Vertiefungen eingreifen.

Durch eine derartige Ausgestaltung des Rekuperators ergibt sich ein deutlich verbesserter Wirkungsgrad in Folge verbessertem Wärmeaustausch.

Gemäß einer weiteren Ausgestaltung der Erfindung sind die Erhöhungen gleichmäßig, in regelmäßigen Abständen zueinander entlang der Innenseite und/oder entlang der Außenseite angeordnet sind.

Dabei können die Erhöhungen parallel zur Längsachse des Rekuperators oder dazu winklig angeordnet sein.

Alternativ können die Erhöhungen auch in unregelmäßigen Abständen und/oder Formen angeordnet sein.

Mit sämtlichen dieser Ausführungen kann ein guter Wirkungsgrad erreicht werden.

Gemäß einer weiteren Ausgestaltung der Erfindung sind die Erhöhungen als Rippen ausgebildet.

Auf diese Weise kann mit einer grundsätzlich bekannten Ausführungsform eine einfache Herstellbarkeit und ein guter Wirkungsgrad erzielt werden.

In bevorzugter Weiterbildung der Erfindung sind die zellularen Strukturen aus einem keramischen Precursor im 3D-Druck geformt und gebrannt.

Dies ermöglicht eine einfache und kostengünstige Herstellbarkeit und eine innige Verbindung der zellularen Strukturen mit dem Rekuperator.

Gemäß einer weiteren Ausgestaltung der Erfindung ist der Grundkörper als massiver Keramikkörper ausgebildet, an dem die zellularen Strukturen erzeugt sind.

Auf diese Weise wird eine hohe Festigkeit ermöglicht und eine sichere Aufnahme der leichter zerbrechlichen zellularen Strukturen ermöglicht.

Gemäß einer weiteren Ausgestaltung der Erfindung bestehen der Grundkörper und die zellularen Strukture(n) aus dem gleichen Material, insbesondere aus Aluminiumoxid, Zirkonoxid oder einem SiC-Material, wie etwa SiSiC.

In vorteilhafter Weiterbildung der Erfindung sind die Erhöhungen als Rippen ausgebildet, die durch die Vertiefungen in Form von Zwischenräumen voneinander getrennt sind. Die zellularen Strukturen sind hierbei in den Vertiefungen zwischen benachbarten Erhöhungen aufgenommen.

Gemäß einer weiteren Ausgestaltung der Erfindung sind die zellularen Strukturen in den Vertiefungen stoffschlüssig gehalten, was etwa mittels 3D-Druck oder Einsintern erfolgen kann.

Gemäß einer weiteren Ausgestaltung der Erfindung bestehen die zellularen Strukturen aus offenporigem Schaum.

Durch die offenporige Struktur wird ein Durchströmen durch Fluide bzw. Gase erleichtert. Außerdem kann eine Anpassung im Hinblick auf den Druckverlust durch die Art und Dichte der Struktur erzielt werden.

Gemäß einer weiteren Ausgestaltung der Erfindung erstrecken sich die zellularen Strukturen nur über einen Teilbereich des Rekuperators.

Dies ist insbesondere dann zweckmäßig, wenn der Rekuperator aus einem hochwarmfesten Keramikwerkstoff, wie etwa SiSiC, besteht. Dann werden die zellularen Strukturen vorzugsweise nur im weniger beanspruchten Bereich des Rekuperators eingesetzt, da die mechanische Belastbarkeit der zellularen Strukturen begrenzt ist.

Durch die Erfindung wird ferner ein Rekuperatorbrenner angegeben, mit einem Brennerkopf, an dem ein Brennrohr und ein Abgasleitrohr gehalten sind, wobei zwischen dem Brennrohr und dem Abgasleitrohr ein Rekuperator der vorhergehend beschriebenen Art gehalten ist.

Ein derartiger Rekuperatorbrenner zeichnet sich durch einen erhöhten Wirkungsgrad im Vergleich zu herkömmlichen Rekuperatorbrennern bei einer gleichbleibenden oder geringeren Geräuschentwicklung aus.

Vorzugsweise ist hierbei der erste Zuluftkanalabschnitt über einen radialen Verbindungsabschnitt mit dem zweiten Zuluftkanalabschnitt verbunden. Der Abgaskanal grenzt also sowohl von innen als auch von außen an den Zuluftkanal an, so dass sich eine wirkungsvolle Vorwärmung der Zuluft ergibt.

Gemäß einer weiteren Ausgestaltung der Erfindung ist der Rekuperator an den Abgaskanal angesetzt, derart, dass ein axiales Überströmen von Abgas von der Außenseite des Rekuperators in den Abgaskanal ermöglicht ist.

Auf diese Weise ist eine vorteilhafte Montage und ein günstiges strömungstechnisches Verhalten gewährleistet.

Ferner kann der erfindungsgemäße Rekuperator auch bei einem Rekuperatorbrenner mit seitlichem Stutzen zur Abgasabfuhr und zur Vorwärmung von Verbrennungsluft verwendet werden.

Dies ermöglicht auch eine Nachrüstung von bestehenden Brennern mit dem erfindunggemäßen Rekuperator, da in diesem Fall nur der Stutzen entsprechend angepasst werden muss.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile ergeben sich aus der nachfolgenden Beschreibung bevorzugter Ausführungsbeispiele unter Bezugnahme auf die Zeichnung. Es zeigen:
- Fig. 1: einen Längsschnitt durch einen erfindungsgemäßen Rekuperatorbrenner, allerdings der Übersichtlichkeit halber zunächst ohne die zellularen Strukturen zwischen benachbarten Rippen;
- Fig. 2: einen vergrößerten Längsschnitt durch das vordere Ende des Rekuperatorbrenners, bei dem zusätzlich noch das Abgasleitrohr aufgesetzt ist;
- Fig. 3: einen vergrößerten Querschnitt des Rekuperators gemäß Fig. 1, jedoch nunmehr mit verschiedenen besipielhaften zellularen Strukturen in den Vertiefungen zwischen benachbarten Rippen;
- Fig. 4: einen vergrößerten perspektivischen Ausschnitt aus einer alternativen Ausführung einer zellularen Struktur;
- Fig. 5: einen vergrößerten perspektivischen Ausschnitt aus einer alternativen Ausführung einer zellularen Struktur in Form eines Oktaeders;
- Fig. 6: einen vergrößerten perspektivischen Ausschnitt aus einer alternativen Ausführung einer zellularen Struktur in Form von Pyramidenstrukturen und
- Fig. 7: einen vergrößerten perspektivischen Ausschnitt aus einer alternativen Ausführung einer zellularen Struktur in Form von Kreuzstrukturen.

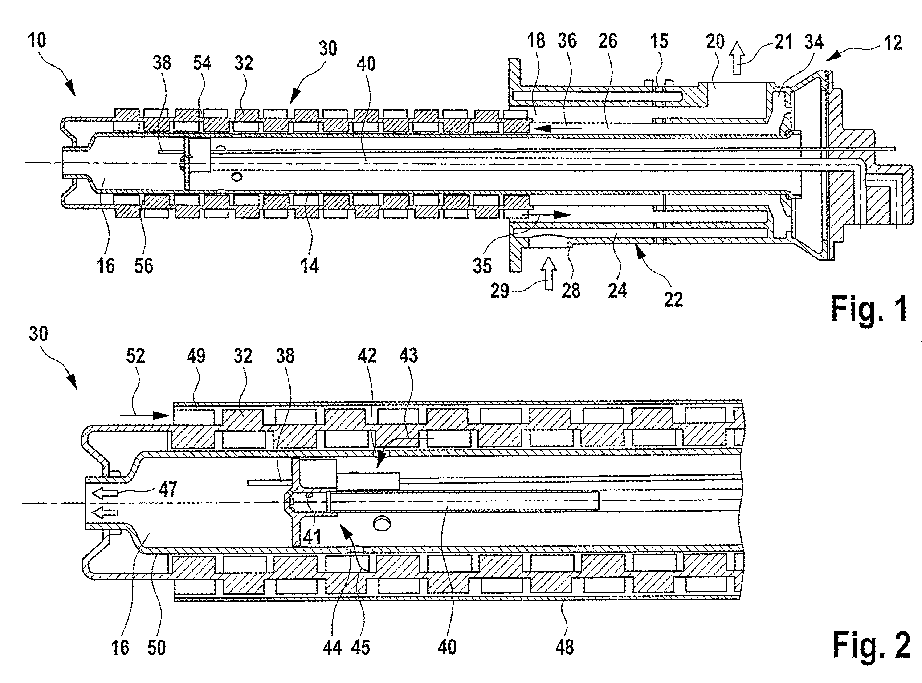

In Fig. 1 ist ein erfindungsgemäßer Rekuperatorbrenner im Längsschnitt dargestellt und insgesamt mit der Ziffer 10 bezeichnet.

Es sei angemerkt, dass die Figuren nicht maßstabsgerecht gezeichnet sind und teilweise aus Gründen der besseren Erkennbarkeit in den Proportionen abgewandelt sind.

Der Rekuperatorbrenner 10 weist einen Brennerkopf 12 auf, an dem ein Brennrohr 14 gehalten ist, an dessen äußeren Ende eine Brennkammer 16 gebildet ist, in die über eine Brennstofflanze 40 Brennstoff zuführbar ist.

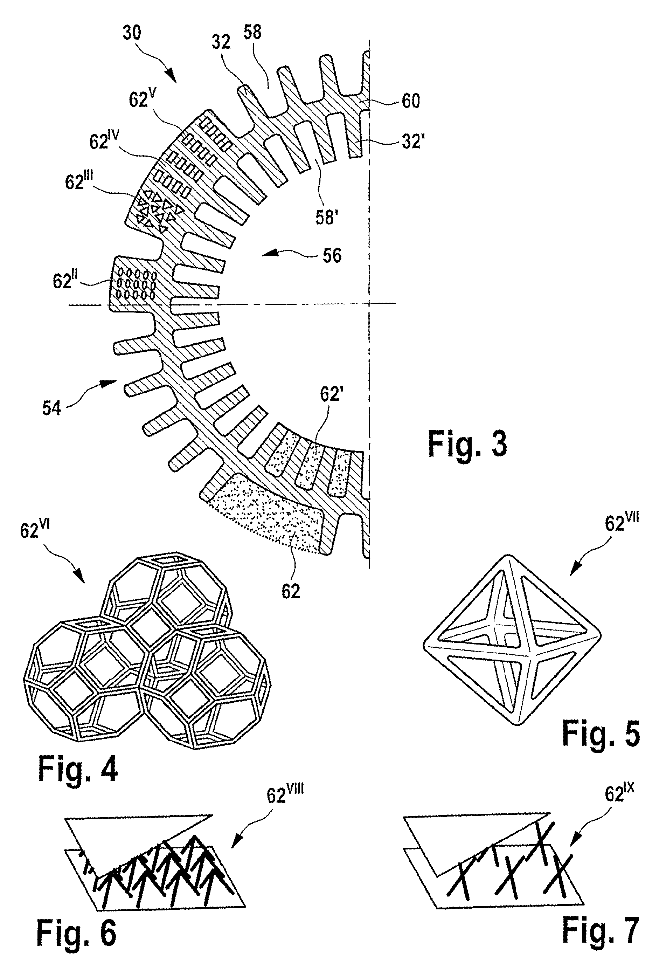

Am Brennerkopf 12 ist ferner ein keramischer Rekuperator 30 gehalten. Der Rekuperator 30 weist eine Vielzahl von Rippen 32 auf, wie nachfolgend noch näher anhand von Fig. 3 beschrieben wird. Der Rekuperator 30 besteht aus einem Keramikmaterial, wie etwa aus Aluminiumoxid oder Zirkoniumoxid.

Der Brennerkopf 12 weist gemäß Fig. 1 einen seitlichen Zuluftstutzen 28 auf, in den Zuluft gemäß dem Pfeil 29 in einen Zuluftkanal 22 eintritt. Der Zuluftkanal 22 weist einen ersten Zuluftkanalabschnitt 24 auf, in den unmittelbar der Zuluftstutzen 28 mündet. Dieser erste Zuluftkanalabschnitt 24 erstreckt sich koaxial zum Brennrohr 14 und ist, wie aus Fig. 1 erkennbar, über einen Verbindungsabschnitt 34 mit einem zweiten Zuluftkanalabschnitt 26 verbunden, der sich gleichfalls koaxial zum Brennrohr 14 erstreckt, jedoch in unmittelbarer Nachbarschaft zum Brennrohr 14, während der erste Zuluftkanalabschnitt 24 radial nach außen gegenüber dem zweiten Zuluftkanalabschnitt 26 versetzt ist. Zwischen diesen Zuluftkanalabschnitten 24 und 26 erstreckt sich ein Abgaskanal 18. Der Abgaskanal 18 grenzt also auf seiner Innenseite an den zweiten Zuluftkanalabschnitt 26 an und grenzt auf seiner Außenseite an den ersten Zuluftkanalabschnitt 24 an.

Aus Fig. 1 ist zu ersehen, dass der Abgaskanal 18 über einen Abgasstutzen 20 radial nach außen ausmündet, so dass das Abgas gemäß dem Pfeil 21 nach außen austritt und in eine geeignete angeschlossene Abgasleitung geführt wird. In den Abgaskanal 18 tritt Abgas in Axialrichtung an der Außenseite 54 des Rekuperators 30 ein, wie durch den Pfeil 35 angedeutet ist.

Beim Rekuperator 30 handelt es sich gemäß Fig. 3 im Prinzip um ein Rohr, entlang dessen Außenseite 54 eine Folge von Rippen 32 ausgebildet ist und an dessen Innenseite 56 gleichfalls eine Folge von Rippen 32' vorgesehen ist. Zwischen benachbarten Rippen 32, 32' sind Zwischenräume oder Vertiefungen 58 bzw. 58' gebildet.

Erfindungsgemäß sind nun die Zwischenräume oder Vertiefungen 58, 58'zwischen benachbarten Rippen 32, 32'jeweils mit zellularen Strukturen ausgefüllt, die in Fig. 3 in verschiedenen Ausführungen mit 62, 62', 62", 62"', 62^{IV}, 62^{V} angedeutet sind.

Der Rekuperator 30 weist einen massiven keramischen Grundkörper 60 auf, an dem die Rippen 32, 32' ausgebildet sind, wobei jeweils zwischen benachbarten Rippen 32, 32' die Vertiefungen 58, 58' ausgebildet sind.

Bei den zellularen Stukturen 62, 62', 62", 62"', 62^{IV}, 62^{V} kann es sich etwa um einen offenporigen Keramikschaum handeln, wie etwa bei 62 bzw. 62' in Fig. 3 angedeutet.

Beliebige andere Strukturen sind denkbar, die einen ausreichenden Durchfluss in Axialrichtung erlauben. Es handelt sich um ähnliche Strukturen, wie sie bei zellularen Metallen bekannt sind. Mit 62", 62"', 62^{IV} und 62^{V} sind verschiedene Querschnittsformen beispielhaft angedeutet.

Fig. 4 zeigt beispielhaft eine offenporige Schaumstruktur 62^{VI} mit drei Poren aus Pentaederflächen, die über quadratische Flächen miteinander verbunden sind. Fig. 5 zeigt beispielhaft eine oktaedrische zellulare Struktur 62^{VII}.

Die Fig. 6 und 7 zeigen beispielhaft weitere zellulare Strukturen 62^{VIII}, 62^{IX} in Form von regelmäßigen Gitterstrukturen mit Pyramiden oder Kreuzen.

Weitere Gitterstrukturen mit Maschen, Quadern, Prismen etc. sind denkbar.

Die zellularen Strukturen 62, 62', 62", 62"', 62^{IV}, 62^{V}, 62^{VI}, 62^{VII}, 62^{VIII}, 62^{IX} in den Zwischenräumen 58 bzw. 58' zwischen den Rippen 32, 32' können beispielsweise durch 3D-Druck eines Precursors erzeugt werden.

Dabei ist es denkbar, zunächst den Grundkörper 60 durch ein übliches keramisches Formgebungsverfahren, wie Pressen, Schlickergießen etc., herzustellen und in die Vertiefungen 58, 58' des so hergestellten Grünlings die zellularen Strukturen 62, 62', 62", 62"', 62^{IV}, 62^{V}, 62^{VI}, 62^{VII}, 62^{VIII}, 62^{IX} mittels 3D-Drucks einzudrucken und anschließend den Formkörper gemeinsam zu brennen.

Alternativ ist es denkbar, zunächst den Grundkörper 60 etwa durch Pressen oder Schlickergießen zu erzeugen, dann zunächst den so hergestellten Grünling durch Brennen zu sintern und erst anschließend mit der Einbringung der zellularen Strukturen 62, 62', 62", 62"', 62^{IV}, 62^{V}, 62^{VI}, 62^{VII}, 62^{VIII}, 62^{IX} zu beginnen.

Im zweiten Fall ergibt sich eine vereinfachte Handhabung des Grundkörpers 60 beim 3D-Druck, was jedoch einen zusätzlichen Brennschritt bedeutet. Eine derartige Herstellung ist bevorzugt, wenn der Grundkörper 60 aus einem anderen Werkstoff als die zellularen Strukturen 62, 62', 62", 62"', 62^{IV}, 62^{V}, 62^{VI}, 62^{VII}, 62^{VIII}, 62^{IX} hergestellt werden soll.

Auch bei einer Herstellung des Grundkörpers 60 als SiSiC-Keramik kann 3D-Druck für die Herstellung eines Grünkörpers genutzt werden. Dieser wird anschließend durch Brennen in einen porösen Percursorkörper überführt, der schließlich durch Flüssig- oder Gasphasensilizierung in eine SiSiC-Keramik überführt wird.

Erfolgt ein gemeinsames Brennen von Grundkörper und zellularen Strukturen, so können die Herstellungszeit verkürzt und die Energiekosten verringert werden.

Wie aus Figur 1 zu erkennen ist, gelangt der Hauptteil der Verbrennungsluft durch zugeordnete Öffnungen 42, 44 im Brennrohr 14 in das Innere des Brennrohrs 14. Über zugeordnete Öffnungen in einer Drallplatte 41 erfolgt schließlich eine Vermischung mit dem über die Brennstofflanze 40 zugeführten Brennstoff und ein Austritt in die Brennkammer 16. Von dort erfolgt der Austritt in den Brennraum, wie durch den Pfeil 47 in Fig. 2 angedeutet ist. Ein kleiner Teil der Verbrennungsluft strömt außen an der Brennkammer 16 vorbei und tritt an der Rekuperatorspitze aus.

Eine zugeordnete Zündelektrode 38 sorgt für die Zündung des Gemisches. Die Flammen treten über das axiale Ende aus der Brennkammer 16 in das zu beheizende Volumen aus. Abgase aus den zu beheizenden Volumen gelangen gemäß Fig. 2 auf der Außenseite in den Spalt 49 zwischen dem Abgasleitrohr 48 und dem Rekuperator 30, wie durch den Pfeil 52 in Fig. 2 angedeutet ist, und durchströmen einerseits den Spalt 49 andererseits die Zwischenräume zwischen den Rippen 32 durch die zellularen Strukturen 62, 62', 62", 62"', 62^{IV}, 62^{V}, 62^{VI}, 62^{VII}, 62^{VIII}, 62^{IX} und gelangen schließlich am Ende der Rippenstruktur in Axialrichtung in den Abgaskanal 18 des Brennerkopfes 12.

Auch zwischen dem Rekuperator 30 und der Außenoberfläche des Brennrohrs 14 besteht ein gewisser Spalt 50 gemäß Fig. 2. Die zellularen Strukturen 62, 62_{'}, 62", 62"', 62^{IV}, 62^{V}, 62^{VI}, 62^{VII}, 62^{VIII}, 62^{IX} zwischen benachbarten Rippen 32 erstrecken sich möglichst soweit in Radialrichtung, dass der Spalt 50 soweit wie möglich verringert wird.

Im Brennerkopf 12 ergibt sich ein Wärmeübergang vom Abgas im Abgaskanal 18 auf die Verbrennungsluft im zweiten Zuluftkanalabschnitt 26 im Gegen¬stromprinzip. Zusätzlich ergibt sich im Brennerkopf 12 noch ein weiterer Wärmeübergang vom Abgas im Abgaskanal 18 auf die Verbrennungsluft im ersten Zuluftkanalabschnitt 24 im Gleichstrom.

Durch diese doppelte Vorwärmung der Zuluft im Brennerkopf 12 ergibt sich eine weitere Wirkungsgraderhöhung.

Durch die erste Maßnahme, Verwendung von zellularen Strukturen 62, 62', 62", 62"', 62^{IV}, 62^{V}, 62^{VI}, 62^{VII}, 62^{VIII}, 62^{IX} in den Zwischenräumen 58, 58' zwischen den Rippen 32, 32' sowohl auf der Außenseite 54 als auch auf der Innenseite 56 des Rekuperators 30, ergibt sich eine Erhöhung des feuertechnischen Wirkungsgrades.

Ferner weist der erfindungsgemäße Rekuperatorbrenner 10 einen vergleichsweise niedrigen Schalldruckpegel auf.

Durch die zweite Maßnahme, Vorwärmung der Zuluft im Brennerkopf 12 sowohl von innen als auch von außen durch die beiden Zuluftkanalabschnitte 24, 26, ergibt sich eine weitere Erhöhung des feuertechnischen Wirkungsgrades.

Da der gesamte Rekuperator 30 aus Keramik besteht, ergeben sich keine Einschränkungen bezüglich der maximalen Anwendungstemepratur, wie sie bei Rekuperatoren mit metallischen Bestandteilen bestehen.

Das Abgasleitrohr 48 kann direkt mit den Spitzen der Rippen 32, 32' verbunden (gedruckt) werden. Es gibt somit keinen Spalt mehr. Allerdings muss dann eine besondere Befestigung des Rekuperators 30 im Gehäuse des Rekuperatorbrenners gewählt werden.

## Patentansprüche

1. Keramischer Rekuperator für einen Rekuperatorbrenner (10) zur Vorwärmung von Verbrennungsluft mittels Abgaswärme, wobei der Rekuperator (30, 30a, 30b, 30c) einen rohrförmigen Grundkörper (60) mit einer Innenseite (56) und einer Außenseite (54) aufweist, **dadurch gekennzeichnet, dass** zumindest auf der Innenseite (56) oder auf der Außenseite (54) mindestens eine zellulare Struktur (62, 62', 62", 62"', 62^{IV}, 62^{V}, 62^{VI}, 62^{VII}, 62^{VIII}, 62^{IX}) aufgenommen ist, die vorzugsweise in Längsrichtung des Rekuperators (30) durchströmbar ist.

2. Rekuperator nach Anspruch 1, **dadurch gekennzeichnet, dass** zumindest an der Innenseite (56) oder der Außenseite (54) des Rekuperators (30), vorzugsweise an beiden Seiten, jeweils eine Mehrzahl von Erhöhungen (32, 32') und Vertiefungen (58, 58') vorgesehen ist, wobei zellulare Strukturen (62, 62', 62", 62"', 62^{IV}, 62^{V}, 62^{VI}, 62^{VII}, 62^{VIII}, 62^{IX}) vorzugsweise zumindest teilweise in die Vertiefungen (58, 58') eingreifen.

3. Rekuperator nach Anspruch 1 oder 2, **dadurch gekennzeichnet, dass** die zellularen Strukturen (62, 62', 62", 62"', 62^{IV}, 62^{V}, 62^{VI}, 62^{VII}, 62^{VIII}, 62^{IX}) als zumindest teilweise offenporige Schaumstrukturen ausgebildet sind.

4. Rekuperator nach einem der vorhergehenden Ansprüche, **dadurch gekennzeichnet, dass** die zellulare Struktur (62, 62', 62", 62"', 62^{IV}, 62^{V}, 62^{VI}, 62^{VII}, 62^{VIII}, 62^{IX}) eine Zell- oder Porenweite von 1,5 bis 6 Millimeter aufweist.

5. Rekuperator nach einem der vorhergehenden Ansprüche, **dadurch gekennzeichnet, dass** die Erhöhungen (32, 32') gleichmäßig, in regelmäßigen Abständen zueinander entlang der Innenseite (56) und/oder entlang der Außenseite (54) angeordnet sind, wobei die Erhöhungen (32, 32') vorzugsweise parallel zur Längsachse des Rekuperators (30) oder dazu winklig angeordnet sind.

6. Rekuperator nach einem der Ansprüche 1 bis 3, **dadurch gekennzeichnet, dass** die Erhöhungen (32, 32') in unregelmäßigen Abständen und/oder Formen angeordnet sind.

7. Rekuperator nach einem der vorhergehenden Ansprüche, **dadurch gekennzeichnet, dass** die Erhöhungen (32, 32') als Rippen ausgebildet sind.

8. Rekuperator nach einem der vorhergehenden Ansprüche, **dadurch gekennzeichnet, dass** der Grundkörper (60) als massiver Keramikkörper ausgebildet ist, an dem die zellularen Strukturen (62, 62', 62", 62"', 62^{IV}, 62^{V}, 62^{VI}, 62^{VII}, 62^{VIII}, 62^{IX}) erzeugt sind.

9. Rekuperator nach einem der vorhergehenden Ansprüche, **dadurch gekennzeichnet, dass** der Grundkörper (60) und die zellulare(n) Struktur(en) (62, 62', 62", 62"', 62^{IV}, 62^{V}, 62^{VI}, 62^{VII}, 62^{VIII}, 62^{IX}) aus dem gleichen Material, insbesondere aus Aluminiumoxid, Zirkonoxid oder einem SiC-Material bestehen.

10. Rekuperator nach einem der Ansprüche 1 bis 8, **dadurch gekennzeichnet, dass** der Grundkörper (60) und die zellulare(n) Struktur(en) (62, 62', 62", 62"', 62^{IV}, 62^{V}, 62^{VI}, 62^{VII}, 62^{VIII}, 62^{IX}) aus unterschiedlichen Materialien bestehen.

11. Rekuperator nach Anspruch 9 oder 10, **dadurch gekennzeichnet, dass** der Grundkörper (60) und die zellulare(n) Struktur(en) (62, 62', 62", 62"', 62^{IV}, 62^{V}, 62^{VI}, 62^{VII}, 62^{VIII}, 62^{IX}) aus einem Material bestehen, das aus der Gruppe ausgewählt ist, die aus einem SiSiC, aus Zirkonoxid und aus Aluminiumoxid besteht.

12. Verfahren zum Herstellen eines keramischen Rekuperators (30), bei dem ein massiver, rohrförmiger Grundkörper (60) mit einer Innenseite (56) und einer Außenseite (54) durch ein keramisches Formgebungsverfahren hergestellt wird und zumindest auf der Innenseite (56) oder auf der Außenseite (54) mindestens eine zellulare Struktur (62, 62', 62", 62"', 62^{IV}, 62^{V}, 62^{VI}, 62^{VII}, 62^{VIII}, 62^{IX}) vorzugsweise mittels 3D-Druck aus einem Precursor appliziert und anschließend gebrannt wird.

13. Verfahren nach Anspruch 12, bei dem der Grundkörper (60) und die zellulare(n) Strukture(n) (62, 62', 62", 62"', 62^{IV}, 62^{V}, 62^{VI}, 62^{VII}, 62^{VIII}, 62^{IX}) nach der keramischen Formgebung gemeinsam im Grünzustand gebrannt werden.

14. Verfahren nach Anspruch 13, bei dem zunächst der Grundkörper (60) durch ein keramisches Formgebungsverfahren, vorzugsweise ein Pressverfahren oder ein Schlickergießverfahren, als Grünkörper hergestellt und anschließend gebrannt wird, bevor die mindestens eine zellulare Struktur (62, 62', 62", 62"', 62^{IV}, 62^{V}, 62^{VI}, 62^{VII}, 62^{VIII}, 62^{IX}) appliziert wird.

15. Verfahren zum Herstellen eines keramischen Rekuperators (30), bei dem ein massiver, rohrförmiger Grundkörper (60) mit einer Innenseite (56) und einer Außenseite (54) und mindestens einer zellularen Struktur (62, 62', 62", 62'", 62^{IV}, 62^{V}, 62^{VI}, 62^{VII}, 62^{VIII}, 62^{IX}) auf der Innenseite (56) und/oder auf der Außenseite (54) mittels 3D-Druck aus einem Precursor hergestellt und anschließend gebrannt wird.
